# EUROPEAN PATENT SPECIFICATION

(11) **EP 3 599 841 B1**
(45) Date of publication and mention of the grant of the patent: **02.04.2025**
(21) Application number: 18772101.4
(22) Date of filing: 26.03.2018
(51) Int. Cl.: A01K 29/00, A61D 17/00, G06T 7/20

(54) **SYSTEM AND METHOD FOR IDENTIFYING INDIVIDUAL ANIMALS IN A GROUP OF ANIMALS**
SYSTEM UND VERFAHREN ZUR IDENTIFIZIERUNG EINZELNER TIERE IN EINER GRUPPE VON TIEREN
SYSTÈME ET PROCÉDÉ POUR IDENTIFIER DES ANIMAUX INDIVIDUELS DANS UN GROUPE D'ANIMAUX

(30) Priority: 24.03.2017 SE 1750356
(43) Date of publication of application: 05.02.2020
(73) Proprietor: BMP Innovation AB, 171 45 Solna (SE)
(72) Inventor: MCCARTHY, Graham, 171 68 Solna (SE); KORDUNER, Gabriel, 112 21 Stockholm (SE)
(86) International application number: PCT/SE2018/050324
(87) International publication number: WO 2018/174812

(56) References cited:
- EP-A1- 1 212 939
- WO-A1-2005/060867
- WO-A1-2011/057673
- WO-A1-2012/115558
- WO-A1-2012/129657
- WO-A2-2011/039112
- KR-A- 20150 118 245
- US-A1- 2010 107 985
- US-A1- 2011 102 154
- US-A1- 2015 327 518
- US-A1- 2015 351 885

## Description

### Technical field

The present invention relates to systems and methods for determining the identity of an individual animal within a group of animals, such as cattle animals.

### Background art

In order to keep track of animals, especially livestock such as cattle animals, some kind of monitoring is required. Existing systems include for example number plates attached to an ear, RFID chips, either implanted or otherwise attached and color codes of tails.

Existing systems are generally dependent on external tracking systems in order to read the data, such as manually inspecting the number plates of animals. Further, these systems generally do not have any real time or positioning ability.

By having a good monitoring system, it becomes possible to keep track of animals, which may be important in a variety of different scenarios. For example if an animal is sick, it would be desirable to remove it from other animals. If an animal shows signs of e.g. being pregnant, other actions may be required.

One such system is disclosed in US 2011/102154 A1. This document discloses a system for detection and position determination of movable objects, comprising electronic transceiver units provided on movable objects, and fixed transceiver facilities which communicate with the electronic transceiver units.

WO 2012/115558 discloses another system a for monitoring livestock, wherein the monitoring is performed by way of a light sensitive pixel grid sensor, wherein a reading in a pixel indicates an equivalent location in a monitored area. Each animal is equipped with a reflective surface such as reflector tags, and in terms of the pixel grid the tags of different animals are identical, except for the respective locations of the tags.

It would be desirable to achieve systems and methods for better monitoring of animals.

### Summary of invention

An object of the present invention is to solve at least some of the problems outlined above.

According to a first aspect of the invention defined in claim 1, there is provided a method performed by a video monitoring system comprising at least one video camera and a processor for identifying an individual animal in a group of animals in an area, each animal being provided with an identification tag, the area comprising at least one identification station having reading means for reading the identification tag of the individual animal. The method comprises monitoring the group of animals and detecting a visually observable event of interest related to an individual animal among the plurality of animals. After detection of an event of interest, the method comprises tracking the individual animal who the event of interest was related to, and then detecting an interaction between the individual animal and an identification station. Upon this detection of an interaction, an identity is determined for the individual animal based on information read from the identification tag of the individual animal at the identification station.

By using such a method, it becomes possible to efficiently identify animals within a group of animals, without having to constantly track each individual animal, which entails a more efficient system with large savings in power consumption relative to other available options.

In an optional embodiment, the identification station is stationary. In another optional embodiment, the identification station may be portable.

In an optional embodiment, the event of interest is a movement indicative of the animal being in oestrus.

In an optional embodiment, the monitoring is performed with thermal imagers. By using thermal imagers instead of regular video cameras, it becomes easier to distinguish between individual animals, and the method becomes less sensitive to variations in background variations, lighting conditions and similar variables.

According to a second aspect of the invention defined in claim 6, there is provided a system for identifying an individual animal in a group of animals. The system comprises at least one identification station operatively connected to a database, wherein the identification station has reading means for reading an identification tag of the animal. The system further comprises a video monitoring system monitoring the area, wherein the video monitoring system comprises at least one camera and a processor. The processor is adapted for controlling the video monitoring system for performing the steps of the method of the first aspect, which entails the steps of monitoring the group of animals, detecting a visually observable event of interest related to the individual animal among the plurality of animals, tracking the individual animal that the event of interest was related to, detecting an interaction between the individual animal and the identification station and determining an identity for the individual animal based on information read at the identification station.

In an optional embodiment, the video monitoring system comprises thermal imagers.

There are further optional embodiments of the second aspect corresponding to the optional embodiments of the first aspect.

The aspects and embodiments described above are freely combinable with each other. There are optional embodiments of the second aspect that correspond to the optional embodiments of the first aspect.

### Brief description of drawings

The solution will now be described more in detail, by way of example, with reference to the accompanying drawings, in which:
Fig. 1 shows a method according to the present disclosure.
Fig. 2 shows an area to be covered by the methods and systems of the present disclosure.
Fig. 3 shows the positioning of a surveillance system according to the present disclosure.

### Description of embodiments

In the following, a detailed description of a system and a method according to the invention will be given.

Shortly described, the present disclosure relates to systems and methods for surveillance of animals, wherein individual animals within a herd of animals may be monitored, distinguished and tracked. A number of identification stations with known positions are positioned throughout an area to be monitored. Examples of suitable such identification stations include where animals are fed, where they drink water or where they are milked. At the detection of an event of interest, an individual animal is singled out by the monitoring system, and is given a temporary ID. The individual animal is then tracked until the animal comes into contact with one of the identification stations, whereupon the temporary ID is linked with a stored ID at the identification station. The systems and methods in this disclosure may also have the capability of tracking multiple individual animals simultaneously.

By having such an identification system, it becomes possible to easily identify relevant animals when events of interest occur, while not requiring constant updates of locations which is very energy consuming. Having a positioning determining system for animals which continuously determines their positions is very difficult, such systems requires a portable positioning device to be attached to the animals and such portable devices typically requires too much battery power in order to be a viable solution. Furthermore, such positioning devices are often too imprecise to determine which animal is which in a group of animals in close proximity of each other.

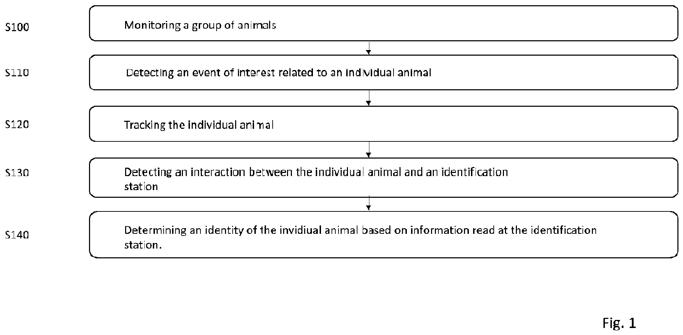

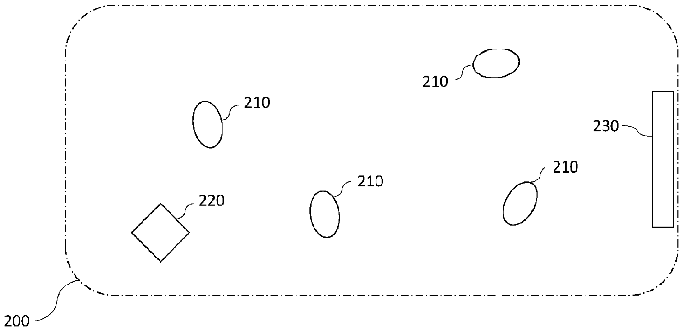

Fig. 1 shows the steps of a method according to the present disclosure. The method is to be performed in an area which is being monitored, wherein a group of animals is present within the area. Each animal is provided with an identification tag. The monitored area comprises at least one identification station, which is typically positioned at a place which the animals pass at regular intervals, such as for example a feeding station, drinking station, milking station or a gate.

In a first step S100, a group of animals in an area are monitored with a surveillance system. The monitoring is typically done by use of a video surveillance system, and in some embodiments the monitoring may also be performed with thermal imagers. In most embodiments, the video surveillance system is constantly active and monitors a predetermined area. In some embodiments, the monitored area is an enclosed area, such as a barn, and in some embodiments the monitored area is a part of an open area, such as a field situated outdoors.

In a second step S110, an event of interest related to an individual animal is detected. This event of interest may for example be a specific behavior or a specific interaction between animals. The specific behavior may be behavior that is indicative of a certain state of the animal, such as a movement that indicates an injury, a movement that indicates an illness or a movement that indicates a condition such as oestrus. One of the main indications is so called standing oestrus and is simply the changes in animal behavior that are associated with an animal standing to be mounted by a bull or another female. Other indications include chin resting, sniffing and licking of the urogenital region. All these movements and behaviors can be detected, distinguished and characterized using video imaging and image processing.

The event of interest is visually observable such that characteristics of the event, wherein the event may be an interaction between two animals, are possible to discern from the captured video. Characteristics of the event may in some embodiments comprise movements of the limbs or other parts of the animal, and similar interactions which would not be possible to detect based on only the position of the animals, but which is possible to detect with video of the animals.

In some embodiments, the detection of an event of interest may be based on information obtained from a user. In some embodiments, multiple events of interest related to different animals may be detected simultaneously and/or at very close time intervals, and the method may be adapted to simultaneously detect multiple events of interest related to multiple different animals at the same time and/or at very close time intervals.

In a third step S120, the animal which is the cause and/or object of the event of interest, called the animal of interest, is tracked by use of the surveillance system. In some embodiments, this step may entail tracking multiple animals simultaneously. The tracking step S120 may in some embodiments comprise assigning a temporary tracking ID to the animal which is being tracked. The tracking step S120 comprises continually tracking the individual animal of interest until the animal comes into contact with an identification station. In some embodiments, the method may be adapted to continuously track multiple animals at the same time, such as when multiple events of interest have been detected during a time period in which none of the animals that are the objects and/or causes of the events of interests have interacted with an identification station.

In some embodiments, continually tracking the individual animal of interest comprises that the animal of interest is constantly kept in view of the video surveillance system, such that it is possible to visually determine that it is the same animal of interest being followed the whole time. Such visual determination may be done by using e.g. image recognition technology. As will be understood, in some embodiments wherein the video surveillance system comprises multiple video cameras, the animal of interest may go out of view of one camera but at the same time be in the view of another camera. Continually tracking the animal may then comprise that the animal of interest is always in view of at least one camera for the duration of the continual tracking. In some embodiments, this may comprise controlling one or multiple cameras of the video surveillance system such that the animal of interest is kept in view, for example by adjusting the angle and/or position of at least one video camera.

In a fourth step S130, an interaction between the individual animal of interest and an identification station is detected. Such an interaction typically comprises the animal of interest passing by or stopping at the identification station, wherein the identification typically is stationed at a location where the animal regularly passes by as described earlier.

At the identification station, the identification tag of the animal is read and an identity is determined for the animal in a step S140. In some embodiments, this step comprises reading the identification tag with suitable reading means, and extracting an identification handle from the identification tag of the animal, wherein the identification handle is the identity of the cow. Depending on the implementation, such an identification handle may be a number, a name, a color code, an image of the cow. In a typical embodiment, the identification handle is a number.

Looking at Fig. 2, an area being monitored will now be described. The area 200 may be any area, both indoors and outdoors, such as a barn or a field. The boundaries of the area 200 may be physical boundaries, such as walls, or it may be boundaries of the area which is monitored by a surveillance system.

The area 200 typically comprises a group of animals 210, such as cattle animals. As will be understood, the amount of animals present within the area may vary over time, at times there may be a large amount of animals present and at times there may be very few animals 210 present. The animals 210 are provided with an identification tag. It is common that animals, especially cattle animals, are given an identification tag relatively soon after birth, and this identification tag is then present and active during the lifetime of the animal. Such an identification tag may be externally positioned on the animal, such as a plate on the body of the animal, or it may be implanted into the body of the animal. It should be noted that the image of Fig. 2 is used as an illustrative example, a live implementation of methods and systems according to the present disclosure would typically contain video footage of cattle animals in which it is possible to discern characteristics such as the shape and size of the animal, and possibly also other characteristics such as color, patterns in skin color, and other similar characteristics. Further, as will be understood, video footage is in most embodiments three-dimensional footage, wherein depth information is available.

The area comprises at least one identification station 220, 230 which comprises means for reading the identification tag of the animal. In some embodiments, the identification station is operatively connected to a dataset comprising information about the identification tags of relevant animals. As previously mentioned, the identification stations are typically stationary and positioned at areas where the animals pass by and/or interact with at regular intervals, such as at a feeding station 210 or a gate 220. In some embodiments, the identification stations may be reading means placed underground, such that the identification of animals are automatically read when an animal passes over the identification station.

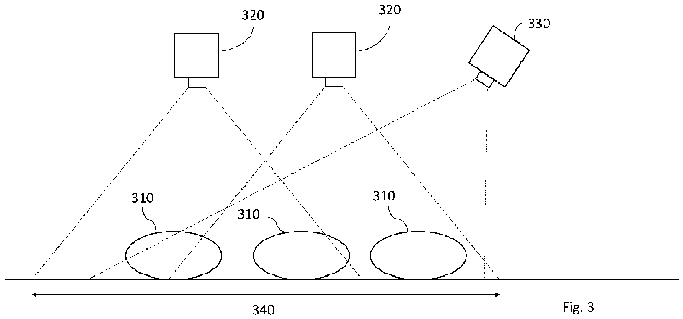

In Fig. 3, an example of the positioning of the surveillance system is shown. The surveillance system comprises at least one video camera 320, 330 with the capability to record video sequences. In some embodiments, the video camera 320, 330 may be a thermal imager such as an infrared camera. By having an infrared camera, it may become easier to distinguish between different animals, and the system also becomes less sensitive to changes in background, color, lighting and similar conditions.

The video camera(s) 320, 330 cover a certain area with their field(s) of view, as shown with the dotted lines in Fig. 3. The covered area 340 depends on the angle, height and field of view of the individual cameras 320, 330. The covered area 340 typically comprises several animals 310, such as cattle animals.

In most embodiments, the video surveillance system positioned at a height above the area to be covered 340, with a direction generally vertically and downward pointing as shown by cameras 320. As will be understood, the cameras may also be angled as shown by camera 330.

By having the cameras positioned above the area to be monitored, it becomes easier to distinguish between individual animals, as compared with a system mounted on ground level. This is especially true when the system comprises thermal imagers as the video surveillance system. In a typical embodiment, the video surveillance system is positioned approximately 4-10 meters above ground level.

By having methods and systems as described above, it becomes possible to track animals in an efficient manner only when it is necessary, where it is also possible to detect events of interest and link these events with specific individual animals. By performing such linking it becomes possible to obtain important information related to individual animals in a herd, such as for example when an animal is sick, injured, pregnant, in oestrus, or other significant events that may require an action from a user.

Regarding the currently available options for the same functionality, having a video surveillance system which continuously monitors and tracks all animals is very expensive and resource demanding. Having a solution with positioning tags on all animals which continuously monitors their location is also very expensive and difficult to manage, due to the relatively high power demand from such positioning devices, which entails that batteries would have to be changed very often. Further, if having a positioning system based on only positioning tags, it is difficult and impractical to use the same system for determining events of interest, at least on a detailed level.

Although the description above contains a plurality of specificities, these should not be construed as limiting the scope of the concept described herein but as merely providing illustrations of some exemplifying embodiments of the invention defined by the appended claims. It will be appreciated that the scope of the presently described concept fully encompasses other embodiments which may become obvious to those skilled in the art, and that the scope of the presently described concept is accordingly defined by the appended claims. Reference to an element in the singular is not intended to mean "one and only one" unless explicitly so stated, but rather "one or more". Moreover, it is not necessary for an apparatus or method to address each and every problem sought to be solved by the presently described concept, for it to be encompassed hereby.

## Claims

1. A method, performed by a video monitoring system comprising at least one video camera (320, 330) and a processor, for identifying an animal in a group of animals (210; 310) in an area (200), each animal (210; 310) being provided with an identification tag, the area comprising at least one identification station (220, 230), the identification station (220, 230) having reading means for reading the identification tag of the individual animal, wherein the method comprises the steps of:
monitoring (S100) the group of animals (210; 310);
detecting (S110) a visually observable event of interest related to the individual animal among the group of animals (210; 310);
after the event of interest has been detected, continually tracking (S120) the individual animal;
detecting (S130) an interaction between the individual animal and the identification station (220, 230), wherein the interaction comprises the animal passing by or
stopping at the identification station (220, 230);
determining (S140) an identity for the individual animal based on information read from the identification tag of the individual animal at the identification station (220, 230).

2. The method according to claim 1, wherein the identification station is stationary.

3. The method according to claim 1, wherein the identification station is portable.

4. The method according to any one of claims 1-3, wherein the event of interest is a movement indicative of the animal being in oestrus.

5. The method according to any one of claims 1-4, wherein the monitoring is performed with thermal imagers.

6. System for identifying an individual animal in a group of animals (210; 310) in an area (200), each animal (210; 310) being provided with an identification tag, said system comprising:
at least one identification station (220, 230), the identification station (220, 230) having reading means for reading the identification tag of the individual animal;
a video monitoring system monitoring the area, the video monitoring system comprising at least one camera and a processor;
wherein the processor is adapted for controlling the video monitoring system for:
monitoring the group of animals (210; 310);
detecting a visually observable event of interest related to the individual animal among the group of animals (210; 310);
after the event of interest has been detected, continually tracking the individual animal;
detecting an interaction between the individual animal and the identification station (220, 230), wherein the interaction comprises the animal passing by or stopping at the identification station (220, 230);
determining an identity for the individual animal based on information read from the identification tag of the individual animal at the identification station (220, 230).

7. System according to claim 6, wherein the identification station is stationary.

8. System according to claim 6 or 7, wherein the video monitoring system comprises thermal imagers.

9. System according to any one of claims 6-8, wherein the video monitoring system is positioned above the area.

## Patentansprüche

1. Ein Verfahren, das von einem Videoüberwachungssystem ausgeführt wird, das mindestens eine Videokamera (320, 330) und einen Prozessor umfasst, zum Identifizieren eines Tieres in einer Gruppe von Tieren (210; 310) in einem Bereich (200), wobei jedes Tier (210; 310) mit einem Identifikationsetikett versehen ist, wobei der Bereich mindestens eine Identifikationsstation (220, 230) umfasst, wobei die Identifikationsstation (220, 230) Lesemittel zum Lesen des Identifikationsetiketts des einzelnen Tieres aufweist, wobei das Verfahren die Schritte umfasst:
Überwachen (S100) der Gruppe von Tieren (210; 310);
Erkennen (S110) eines visuell erkennbaren Ereignisses von Interesse, das mit dem einzelnen Tier in der Gruppe von Tieren (210; 310) in Zusammenhang steht;
nachdem das Ereignis von Interesse erkannt wurde, kontinuierliches Verfolgen (S120) des einzelnen Tieres;
Erkennen (S130) einer Interaktion zwischen dem einzelnen Tier und der Identifikationsstation (220, 230), wobei die Interaktion das Vorbeigehen oder Anhalten des Tieres an der Identifikationsstation (220, 230) umfasst;
Bestimmen (S140) einer Identität für das einzelne Tier basierend auf Informationen, die von der Identifikationsmarke des einzelnen Tieres an der Identifikationsstation (220, 230) gelesen werden.

2. Verfahren nach Anspruch 1, wobei die Identifikationsstation stationär ist.

3. Verfahren nach Anspruch 1, wobei die Identifikationsstation tragbar ist.

4. Verfahren nach einem der Ansprüche 1-3, wobei das Ereignis von Interesse eine Bewegung ist, die darauf hinweist, dass das Tier in Brunst ist.

5. Verfahren nach einem der Ansprüche 1-4, wobei die Überwachung mit Wärmebildkameras durchgeführt wird.

6. System zum Identifizieren eines einzelnen Tieres in einer Gruppe von Tieren (210; 310) in einem Bereich (200), wobei jedes Tier (210; 310) mit einem Identifikationsetikett versehen ist, wobei das System umfasst:
mindestens eine Identifikationsstation (220, 230), wobei die Identifikationsstation (220, 230) Lesemittel zum Lesen des Identifikationsetiketts des einzelnen Tieres aufweist;
ein Videoüberwachungssystem, das den Bereich überwacht, wobei das Videoüberwachungssystem mindestens eine Kamera und einen Prozessor umfasst;
wobei der Prozessor zum Steuern des Videoüberwachungssystems angepasst ist, um:
die Gruppe von Tieren (210; 310) zu überwachen;
ein visuell erkennbares Ereignis von Interesse zu erkennen, das sich auf das einzelne Tier in der Gruppe von Tieren (210; 310) bezieht;
nachdem das Ereignis von Interesse erkannt wurde, das einzelne Tier kontinuierlich zu verfolgen;
Erkennen einer Interaktion zwischen dem einzelnen Tier und der Identifikationsstation (220, 230), wobei die Interaktion das Vorbeigehen oder Anhalten des Tieres an der Identifikationsstation (220, 230) umfasst;
Bestimmen einer Identität für das einzelne Tier basierend auf Informationen, die von der Identifikationsmarke des einzelnen Tieres an der Identifikationsstation (220, 230) gelesen werden.

7. System nach Anspruch 6, wobei die Identifikationsstation stationär ist.

8. System nach Anspruch 6 oder 7, wobei das Videoüberwachungssystem Wärmebildkameras umfasst.

9. System nach einem der Ansprüche 6-8, wobei das Videoüberwachungssystem über dem Bereich positioniert ist.

## Revendications

1. Procédé, mis en œuvre par un système de surveillance vidéo comprenant au moins une caméra vidéo (320, 330) et un processeur, pour identifier un animal dans un groupe d'animaux (210 ; 310) dans une zone (200), chaque animal (210 ; 310) étant pourvu d'une étiquette d'identification, la zone comprenant au moins une station d'identification (220, 230), la station d'identification (220, 230) comportant des moyens de lecture pour lire l'étiquette d'identification de l'animal individuel, dans lequel le procédé comprend les étapes consistant à :
surveiller (S100) le groupe d'animaux (210 ; 310);
détecter (S110) un événement d'intérêt visuellement observable lié à l'animal individuel parmi le groupe d'animaux (210 ; 310);
après que l'événement d'intérêt a été détecté, suivre en continu (S120) l'animal individuel;
détecter (S130) une interaction entre l'animal individuel et la station d'identification (220, 230), l'interaction comprenant le passage ou l'arrêt de l'animal à la station d'identification (220, 230);
déterminer (S140) une identité pour l'animal individuel sur la base d'informations lues à partir de l'étiquette d'identification de l'animal individuel à la station d'identification (220, 230).

2. Procédé selon la revendication 1, dans lequel la station d'identification est stationnaire.

3. Procédé selon la revendication 1, dans lequel la station d'identification est portable.

4. Procédé selon l'une quelconque des revendications 1 à 3, dans lequel l'événement d'intérêt est un mouvement indiquant que l'animal est en oestrus.

5. Procédé selon l'une quelconque des revendications 1 à 4, dans lequel la surveillance est effectuée avec des imageurs thermiques.

6. Système d'identification d'un animal individuel dans un groupe d'animaux (210 ; 310) dans une zone (200), chaque animal (210 ; 310) étant pourvu d'une étiquette d'identification, ledit système comprenant:
au moins une station d'identification (220, 230), la station d'identification (220, 230) comportant des moyens de lecture pour lire l'étiquette d'identification de l'animal individuel;
un système de surveillance vidéo surveillant la zone, le système de surveillance vidéo comprenant au moins une caméra et un processeur;
le processeur étant conçu pour commander le système de surveillance vidéo pour :
surveiller le groupe d'animaux (210 ; 310);
détecter un événement d'intérêt visuellement observable lié à l'animal individuel parmi le groupe d'animaux (210 ; 310);
après que l'événement d'intérêt a été détecté, suivre en continu l'animal individuel ;
en détectant une interaction entre l'animal individuel et la station d'identification (220, 230), l'interaction comprenant le passage de l'animal par la station d'identification (220, 230) ou son arrêt à la station d'identification (220, 230);
déterminer une identité pour l'animal individuel sur la base d'informations lues à partir de l'étiquette d'identification de l'animal individuel au niveau du poste d'identification (220, 230).

7. Système selon la revendication 6, dans lequel le poste d'identification est stationnaire.

8. Système selon la revendication 6 ou 7, dans lequel le système de surveillance vidéo comprend des imageurs thermiques.

9. Système selon l'une quelconque des revendications 6 à 8, dans lequel le système de surveillance vidéo est positionné au-dessus de la zone.
